# EUROPÄISCHE PATENTSCHRIFT

(11) **EP 0 512 384 B1**
(45) Veröffentlichungstag und Bekanntmachung des Hinweises auf die Patenterteilung: **31.05.1995**
(21) Anmeldenummer: 92107273.2
(22) Anmeldetag: 29.04.1992
(51) Int. Cl.: B65H 18/04, B65H 18/06, F16P 3/02

(54) **Lagervorrichtung für Wellen, insbesondere Spannwellen von Wickelmaschinen**
Bearing structure for shafts, in particular clamping shafts for winding machines
Dispositif de palier pour arbres, en particulier pour arbres de serrage dans les machines à enrouler

(30) Priorität: 03.05.1991 DE 9105487 U
(43) Veröffentlichungstag der Anmeldung: 11.11.1992
(73) Patentinhaber: Heinrich Vorwald GmbH & Co. KG, D-49176 Hilter (DE)
(72) Erfinder: Talas, Matyas, W-4505 Bad Iburg (DE); Szöcs, Dezsö, W-4502 Bad Rothenfelde (DE)
(74) Vertreter: Busse & Busse Patentanwälte

(56) Entgegenhaltungen:
- EP-A- 0 101 544
- EP-A- 0 348 806
- US-A- 2 954 182
- US-A- 4 438 554

## Beschreibung

Die Erfindung bezieht sich auf eine Lagervorrichtung für Wellen, insbesondere für Spannwellen von Wickelmaschinen, gemäß dem Oberbegriff des Anspruchs 1.

Bei bekannten Lagervorrichtungen dieser Art ist der Verschlußteil als kreisförmiger Scheibenkörper ausgebildet, der um eine Klappachse mit dem Aufnahmeteil schwenkbar verbunden ist und in Schließstellung eine zur Lagerachse senkrechte Ausrichtung hat. In einer für den Wellenwechsel vorbestimmten Drehstellung des Aufnahmeteils, in der die Profiltasche mit ihrer umfangsseitigen Zugangsöffnung nach oben weist und die Klappachse des Verschlußteils horizontal ausgerichtet ist, kann der Verschlußteil zum Lagergehäuse hin in eine Offenstellung verschwenkt werden, in der die umfangsseitige Zugangsöffnung der Profiltasche nach oben hin vollständig freigegeben ist. Die rückseitig dem Verschlußteil gegenüberliegende Stirnfläche des Lagergehäuses weist eine Abschrägung auf, die das Verschwenken des Verschlußteils in dessen Offenstellung in der für den Wellenwechsel vorgegebenen Drehstellung des Aufnahmeteils gestattet, zugleich aber ein Auflaufteil bildet, das den Verschlußteil in seine Schließstellung zurückklappt, sobald der Aufnahmeteil seine für den Wellenwechsel vorgegebene Drehstellung verläßt.

Der Erfindung liegt die Aufgabe zugrunde, eine Lagervorrichtung der eingangs genannten Art zu schaffen, die hinsichtlich ihres Unfallschutzes verbessert ist.

Die Erfindung löst diese Aufgabe mit den Merkmalen des Anspruchs 1. Hinsichtlich wesentlicher weiterer Ausgestaltungen wird auf die Ansprüche 2 bis 21 verwiesen.

Die Lagervorrichtung nach der Erfindung kapselt die im Betrieb umlaufenden Teile der Aufnahmevorrichtung umfangsseitig durch ein stillstehendes Schutzgehäuse, das lediglich bei Stillstand des Aufnahmeteils in seiner für den Wellenwechsel vorbestimmten Drehstellung in eine Wechselstellung verschiebbar ist, in der der Verschlußteil die Profiltasche für einen Wellenwechsel freigibt. Der durch die Bewegung des Schutzgehäuses in seine Offenstellung überführte Verschlußteil bleibt dabei abgeschirmt innerhalb des Schutzgehäuses. Durch Zurückbewegen des Schutzgehäuses in seine Betriebsstellung wird die Lagervorrichtung für den Betrieb freigegeben. Aber auch bei versehentlich einsetzendem Betrieb werden Verschlußteil und Schutzgehäuse selbsttätig in ihre Schließ- bzw. Betriebsstellung zurückbewegt, noch bevor der Aufnahmeteil eine Viertelumdrehung zurückgelegt hat.

Zahlreiche weitere Einzelheiten und Vorteile ergeben sich aus der nachfolgenden Beschreibung und der Zeichnung, in der zwei Ausführungsbeispiele des Gegenstands der Erfindung näher veranschaulicht sind. In der Zeichnung zeigen:
- Fig. 1: einen Axialschnitt durch eine Lagervorrichtung nach der Erfindung in handbetätigter Ausführung, in Betriebsstellung der Teile,
- Fig. 2: eine Stirnansicht zu Fig. 1,
- Fig. 3: eine bereichsweise aufgebrochene Seitenansicht der Lagervorrichtung nach Fig. 1 in Betriebsstellung der Teile,
- Fig. 4: eine Ansicht ähnlich Fig. 3 zur Veranschaulichung der Teile in Wechselstellung,
- Fig. 5: einen Axialschnitt ähnlich Fig. 1 durch eine Lagervorrichtung in einer Ausführung mit Druckmittelantrieb, und
- Fig. 6: eine Stirnansicht der Lagervorrichtung in Fig. 5.

Die in der Zeichnung veranschaulichte Lagervorrichtung für Wellen ist der einem Ende einer auswechselbar zu lagernden Welle zugeordnete Teil einer Wellenlagerung, die zwei in fluchtender Gegenüberlage an einem Maschinengestell od.dgl. festgelegte Lagervorrichtungen umfaßt.

Lagervorrichtungen für die auswechselbare Lagerung von Wellen finden vornehmlich bei der Lagerung von Wickelwellen, insbesondere Spannwellen, in Wickelmaschinen Anwendung, wie sie überwiegend für das Auf- und Abwickeln von Materialbahnen aus Papier-, Kunststoff- und/oder Metallfolie zum Einsatz kommen.

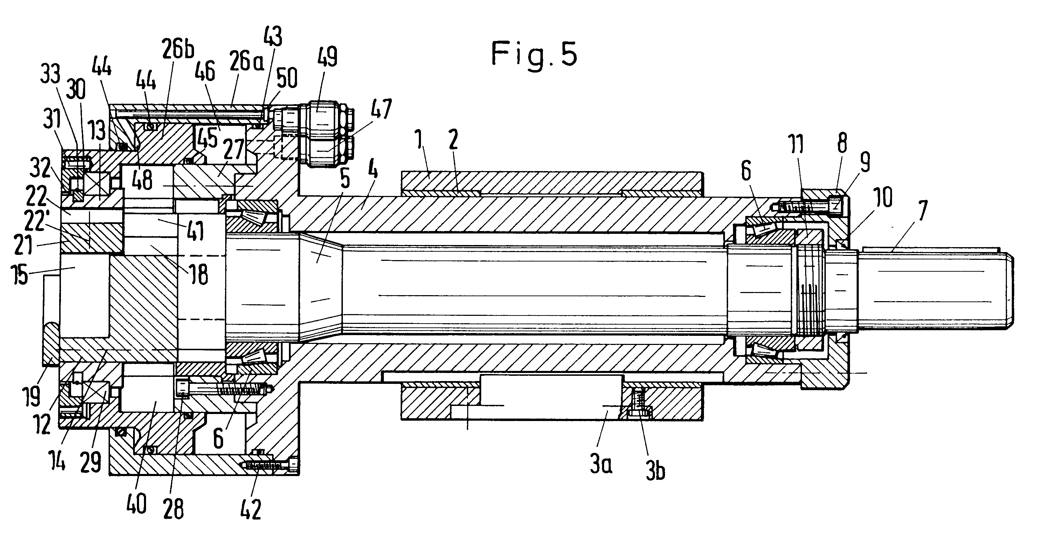

Die dargestellte Lagervorrichtung ist als Schiebelager ausgebildet und umfaßt ein Flanschlagergehäuse 1 mit Büchsen 2, in dem das durch eine mittels Schrauben 3b gehaltene Paßfeder 3a gesicherte eigentliche Lagergehäuse 4 axial verschieb- und feststellbar abgestützt ist. Schiebelager dieser Art ermöglichen die Anpassung einer Wellenlagerung an unterschiedliche Betriebsbedingungen innerhalb ihres auslegungsgemäßen Verschiebebereiches. Anstelle des Flanschlagergehäuses 1 kann auch ein Stehlagergehäuse 1 (wie in Fig. 5) vorgesehen sein, und es ist auch möglich, das eigentliche Lagergehäuse 4 unmittelbar selbst als Steh- oder Flanschlagergehäuse auszubilden.

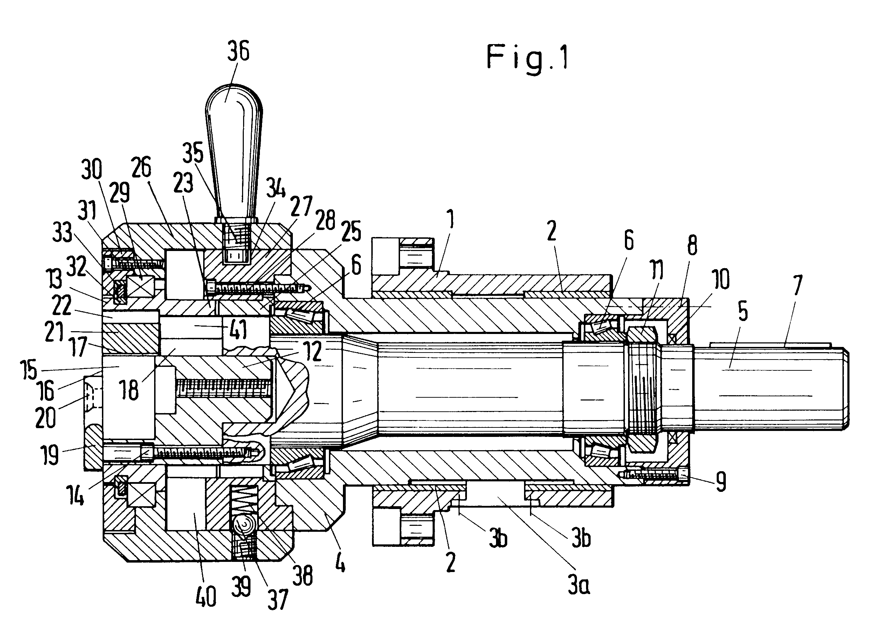

Im Lagergehäuse 4 ist eine Trägerwelle 5 über Kegelrollenlager 6 drehbar gelagert, die einen aus dem Lagergehäuse 4 vorstehenden Wellenzapfen mit Paßfeder 7 aufweist. Die Tragerwelle 5 durchgreift nahe ihrem Wellenzapfen einen Gehäusedeckel 8, der mittels Schrauben 9 am Lagergehäuse 4 befestigt und gegenüber der Trägerwelle 5 durch eine Wellendichtung 10 abgedichtet ist. Eine auf einen mit Gewinde versehenen Abschnitt der Trägerwelle 5 aufgeschraubte Stellmutter 11 stützt sich mit ihrer in Figur 1 linken Seite am Kegelrollenlager 6 ab und ermöglicht so eine Fixierung der Trägerwelle 5 im Lagergehäuse 4.

An ihrem dem Wellenzapfen abgewandten Ende ist die Trägerwelle 5 mit einer freigeb- und verriegelbaren Aufnahmevorrichtung für ein dieser zugewandtes Ende einer Welle versehen, die einen fest mit der Trägerwelle verbundenen Aufnahmeteil 12 und einen relativ zu diesem verlagerbaren, mit diesem mitumlaufenden Verschlußteil 13 umfaßt. Der Aufnahmeteil 12 ist über Schrauben 14 mit dem inneren Stirnende der Trägerwelle 5 verschraubt und dementsprechend auswechselbar mit der Trägerwelle 5 verbunden. Er umfaßt eine Profiltasche 15 mit axialer und umfangsseitiger Zugangsöffnung 16 bzw. 17 für einen formlich angepaßten, ein Gegenprofil darbietenden Kupplungsteil am Ende einer Welle sowie ferner eine axial ausgerichtete Ausnehmung 18 an seinem Umfang, die sich in ihrem vorderen Teil mit der Profiltasche 15 verschneidet und im Verschneidungsbereich die umfangsseitige Zugangsöffnung 17 definiert. Die axiale Öffnung der Profiltasche 15 ist bereichsweise abgedeckt durch eine für axiale Verschiebungen bedeutsame Mitnehmerformscheibe 19, die mittels Schrauben 20 mit dem dem benachbarten Ende des Aufnahmeteil 12 verschraubt ist.

Der Verschlußteil 13 ist als auf dem Aufnahmeteil 12 verdrehfest abgestützter, jedoch zwischen Offen- und Schließstellung axial verschiebbar geführter Ringschieber ausgebildet, der mit einem einwärts in die Ausnehmung 18 des Aufnahmeteils 12 eingreifenden Ansatz 21 versehen ist. Dieser Ansatz 21 kuppelt den Verschlußteil 13 und den Aufnahmeteil 12 in Drehrichtung und verschließt in Schließstellung des Verschlußteils 13 die umfangsseitige Zugangsöffnung 17 zur Profiltasche 15, wie dies der Figur 1 entnommen werden kann. Dabei ist der Ansatz 21 mit seinem Verschlußteil 13 über eine Paßfeder 22 und Schrauben 22' auswechselbar verbunden. Die Auswechselbarkeit der Teile 12, 19 und 21 ermöglicht eine Anpassung der Aufnahmevorrichtung an unterschiedliche Profile von Kupplungsenden aufzunehmender Wellen.

Der Verschlußteil 13 ist auf seiner dem Lagergehäuse 4 zugewandten Stirnseite mit einem Nockenteil in Gestalt einer Anzahl von axial vorspringenden, ungleichmäßig über den Umfang verteilt angeordneten, im wesentlichen dreieckförmigen Nocken 23 versehen, deren Innen- und Außenflächen jeweils auf einer Zylinderfläche liegen. Den Nocken 23 des Verschlußteils 13 sind entsprechende dreieckförmige Auflaufausnehmungen 24 zugewandt, die in der Stirnseite eines dem Lagergehäuse 4 ortsfest zugeordneten ringförmigen Auflaufteils 25 ausgespart sind. Die Auslaufausnehmungen 24 sind dabei derart angeordnet und den Nocken 23 derart zugeordnet, daß nur in einer für den Wellenwechsel vorbestimmten Drehstellung des Aufnahmeteils 12 die Nocken 23 in die Auslaufausnehmungen 24 einführbar sind und damit die Möglichkeit eröffnen, den Verschlußteil 13 in Offenstellung zu überführen.

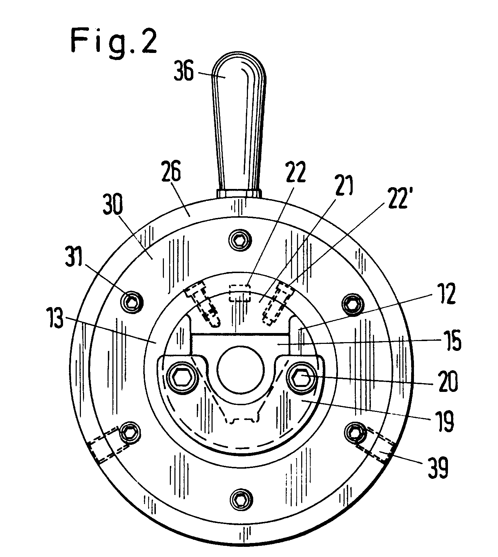

Die Aufnahmevorrichtung 12,13 ist von einem Schutzgehäuse 26 umgeben, das bei der Ausführung nach den Figuren 1 bis 4 einteilig ausgebildet ist und einen im wesentlichen L-förmigen Querschnitt hat. Mit der zylindrischen Innenfläche seines Langsschenkels stützt sich das Schutzgehäuse 26 auf der zylindrischen Außenfläche des Lagergehäuses 4 ab, wobei der vom Schutzgehäuse 26 in Schließstellung des Verschlußteils 13 umgriffene Teil des Lagergehäuses 4 von einem stirnseitig an das Lagergehäuse 4 angesetzten, mittels Schrauben 28 festgelegten Ringteil 27 gebildet ist, der das Lagergehäuse fortsetzt.

Der Verschlußteil 13 ist im Schutzgehäuse 26 über ein Lager 29 abgestützt, das zugleich als Mitnehmer den Verschlußteil 13 und das Schutzgehäuse 26 für axiale Bewegungen kuppelt. Das Lager 29 zwischen Schutzgehäuse 26 und Verschlußteil 13 ist im Bereich vor dem Stirnende des Kurzschenkels des Schutzgehäuses 26 angeordnet und wird durch einen vorderen ringförmigen Deckelteil 30 relativ zum Schutzgehäuse 26 in Position gehalten, der in einer axialen Ringausnehmung im Kurzschenkel des Schutzgehäuses 26 mittels Schrauben 31 festgelegt ist. Der Deckelteil 30 umgreift einen Halbring 32 und einen Sprengring 33, die in eine Nut in der Außenseite des Verschlußteils 13 eingreifen und Bestandteil der Kupplung von Verschlußteil 13 und Schutzgehäuse 26 für axiale Bewegungen bilden.

Im Ringteil 27 des Lagergehäuses 4 sind drei über den Umfang verteilt angeordnete, gleichwirkende Nockenbahnen 34 vorgesehen, die einen etwa schraubenlinienförmigen Verlauf haben und jeweils einen am Schutzgehäuse 26 angeordneten Führungsnocken aufnehmen. Dieser Führungsnocken wird von dem inneren Ende eines Gewindedorns 35 gebildet, mittels dem ein radialer Handgriff 36 mit dem Schutzgehäuse 26 verbunden ist.

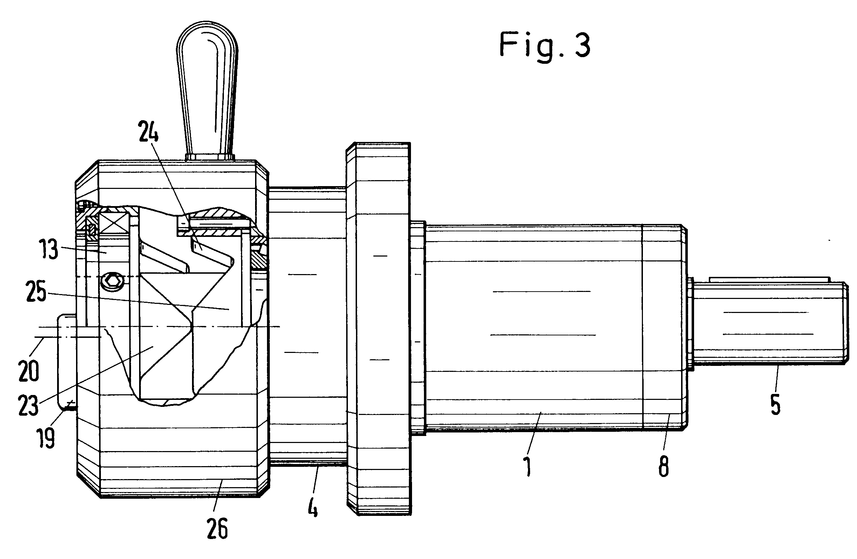

In seiner in Fig. 1 und 3 veranschaulichten Betriebsstellung ist das Schutzgehäuse 26 mittels einer Federrast gegenüber dem Lagergehäuse 4 bzw. dem Ringteil 27 arretiert, die eine Rastkugel 37, eine diese radial nach außen zu drücken bestrebte Feder 38 und eine Rastkerbe am inneren Ende eines Gewindestiftes 39 umfaßt. Die Teile 37,38 sind dabei dem Ringteil 27 und der Gewindestift 39 dem Schutzgehäuse 26 zugeordnet.

Befindet sich die Lagervorrichtung in der Betriebsstellung seiner Teile gemäß Fig. 1, in der eine nicht dargestellte Welle mit ihrem einen Ende in der Profiltasche 15 festgelegt ist (nicht dargestellt), so schirmt das Schutzgehäuse 26 die Aufnahmevorrichtung 12,13 nach außen hin ab und bildet aufgrund seines Stillstandes einen wirksamen Schutz gegen Verletzungen von Personen beim Handtieren im Bereich der Lagervorrichtung.

Zum Wechseln einer an ihren beiden Enden je durch eine Lagervorrichtung gemäß Fig. 1 abgestützten Welle wird der Antrieb auf den Wellenzapfen der Trägerwelle 5 abgeschaltet und das mit ihr verbundene Aufnahmeteil 12 in eine für den Wellenwechsel vorbestimmte Drehstellung gebracht, in der die umfangsseitige Zugangsöffnung 17 zur Profiltasche 15 nach oben zeigt. Die Ausrichtung der Aufnahmeteile 12 beider Lagervorrichtungen kann auch nach der Antriebsabschaltung von Hand vorgenommen werden.

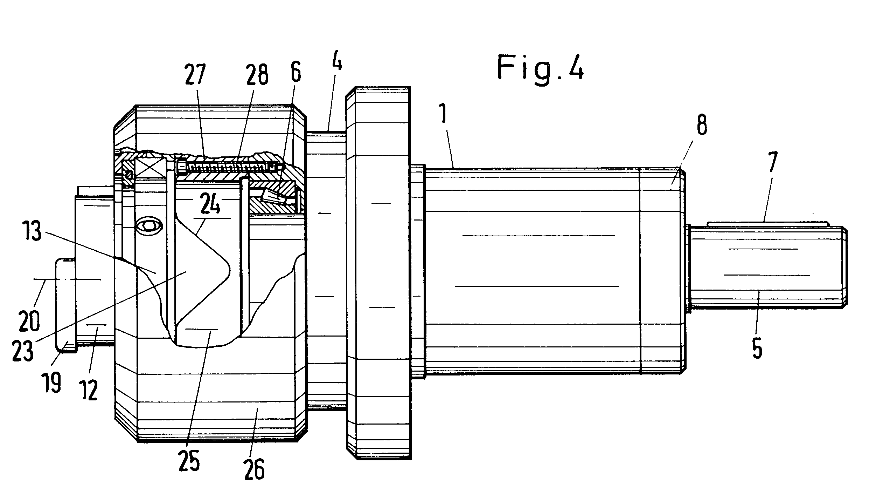

Durch die Ausrichtung des Aufnahmeteils 12 und mit dieser des Verschlußteils 13 gelangen dessen Nocken 23 in eine fluchtende Gegenüberlage zu den Auflaufausnehmungen 24 des ortsfesten Auflaufteils 25, so daß bei einem Verschwenken des Schutzgehäuses 26 über den Handhebel 36 das Schutzgehäuse 26 eine axiale Verschiebung in Fig. 1 nach rechts zum Lagergehäuse 4 hin ausführen kann. Diese axiale Verschiebung erfährt das Schutzgehäuse 26 durch die Wirkung der Nockenbahn 34 auf den Führungsnocken 35. Infolge der Kupplung des Schutzgehäuses 26 und des Verschlußteils 13 für axiale Bewegungen nimmt das Schutzgehäuse 26 bei seiner schraubenlinienförmigen Rückzugsbewegung den Verschlußteil 13 in einer axialen Verschiebebewegung mit, der dadurch in die Fig. 4 veranschaulichte Offenstellung gelangt. In dieser liegt die Profiltasche 15 nach oben hin frei und ist über ihre umfangsseitige Zugangsöffnung 17 für die Entnahme und das Einführen des Kupplungsendes einer Welle zugänglich. Zur Durchführung der axialen Verschiebung von Schutzgehäuse 26 und Verschlußteil 13 ist zwischen der radialen Innenfläche des Kurzschenkels des Schutzgehäuses 26 und der ihr gegenüberliegenden Stirnfläche des Ringteils 27 des Lagergehäuses 4 ein Freiraum 40 vorgesehen, und auch die Umfangsausnehmung 18 im Verschlußteil 13 umfaßt einen rückseitig an den Ansatz 21 angrenzenden Freiraum 41 für die Aufnahme des Ansatzes 21 in der Offenstellung des Verschlußteils 13.

Nach Vornahme eines Wellenwechsels wird das Schutzgehäuse 26 vermittels seines Handgriffs 36 wieder zurückverschwenkt und erfährt durch die Wirkung der Nockenbahn 34 eine Axialverschiebung zurück in seine Betriebsstellung gemäß Fig. 1. Bei dieser Rückstellung nimmt das Schutzgehäuse 26 den Verschlußteil 13 wieder in einer axialen Bewegung mit, der dadurch in seine Schließstellung gelangt.

Bei einem Unterlassen der Rückführung des Schutzgehäuses 26 in die Betriebsstellung vor dem Einschalten des Antriebs auf den Antriebszapfen der Trägerwelle(n) 5 wird dem Verschlußteil 13 durch Zusammenwirken von Auflaufteil 25 und Nockenteil 23 eine selbsttätige Rückführung in die Schließstellung erteilt, da die Auflaufaussparungen 24 mit ihren Keilflächen eine Schubwirkung auf die Keilflächen der Nocken 23 mit der Folge ausüben, daß die Nocken 23 aus den Auflaufausnehmungen 24 herausgedrückt werden und bei Verlassen der Auflaufausnehmungen 24 den Verschlußteil in seine Schließstellung überführt haben. Schon nach Zurücklegen eines geringen Drehwinkel des Aufnahmeteils 12 aus seiner für den Wellenwechsel vorgegebenen Drehstellung heraus ist daher die Lagervorrichtung wieder in voller Betriebsbereitschaft.

Da das Schutzgehäuse 26 den Verschlußteil 13 ständig umgreift und abschirmt, und auch in der Wechselstellung der Aufnahmeteil 12 nur soweit freigelegt wird, daß die Profiltasche 15 gerade zugänglich ist, bietet die Lagervorrichtung einen guten Schutz vor Verletzungen, die bei herkömmlichen Lagervorrichtungen mit ständig freiliegendem Verschlußteil keineswegs ausgeschlossen sind.

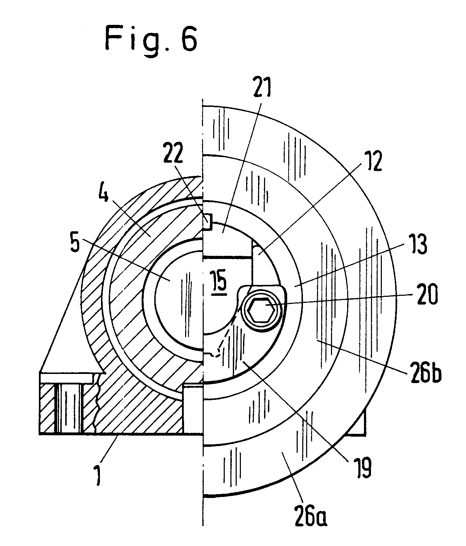

Die in Fig. 5 und 6 dargestellte weitere Ausführungsform sieht anstelle eines Handantriebs für das Überführen der Lagervorrichtung aus der Betriebs- in die Wechselstellung und umgekehrt einen Druckmittelantrieb, insbesondere einen pneumatischen Antrieb vor, wobei jedoch die Grundkonstruktion der Lagervorrichtung nach der Erfindung weitgehend beibehalten ist. Gleiche Bauteile sind daher auch mit gleichen Bezugszeichen versehen.

Abweichend von der Ausführung nach Fig. 1 bis 4 ist das Schutzgehäuse aus zwei Teilen 26a,26b zusammengesetzt, von denen der Außenteil 26 a durch Schrauben 42 fest mit dem Lagergehäuse 4 verbunden ist und von denen der Innenteil 26b axial verschieblich abgestützt ist. Der Außenteil 26a des Schutzgehäuses bildet dabei den Zylinderteil und der Innenteil 26b des Schutzgehäuses den Kolbenteil des Druckmittelantriebs. Der Außenteil 26a ist dabei über Dichtungen 43,44 gegenüber dem Lagergehäuse 4 bzw. dem Innenteil 26b abgedichtet, und der Innenteil 26b ist seinerseits gegenüber dem Ringteil 27 des Lagergehäuses 4 durch eine Dichtung 45 abgedichtet.

Auf seiner dem Lagergehäuse 4 zugewandten Seite grenzt der Innenteil 26b an einen Zylinderraum 46 an, bei dessen Beaufschlagung mit Druckmittel über den Druckmittelanschluß 47 der Innenteil 26b eine Bewegung hin in die in Fig. 5 veranschaulichte Betriebsstellung ausführt. Auf seiner dem Lagergehäuse 4 abgewandten Seite begrenzt der Innenteil 26b einen Zylinderraum 48, bei dessen Beaufschlagung mit Druckmittel über einen Druckmittelanschluß 49 und einen durch den Außenteil 26a hindurchgeführten Verbindungskanal 50 dem Innenteil 26b eine Axialverschiebung aus seiner Betriebsstellung in eine in Fig. 1 nach rechts verlagerte Wechselstellung aufgeprägt wird. Bei beiden Bewegungen nimmt der Innenteil 26b den Verschlußteil 13 aus dessen Schließstellung gemäß Fig. 5 in dessen Offenstellung und umgekehrt mit. Allerdings können auch bei der Ausführung nach Fig. 5 Axialverschiebungen des Innenteils 26b des Schutzgehäuses in die Wechselstellung und des Verschlußteils 13 in die Offenstellung nur durchgeführt werden, wenn sich der Aufnahmeteil 12 wiederum in seiner für den Wellenwechsel vorgegebenen Drehstellung befindet, in der die Profiltasche 15 über eine nach oben weisende umfangsseitige Zugangsöffnung zugänglich ist. Allerdings genügt es - wie auch bei der Ausführung nach Fig. 1 bis 4 -, daß der Spitze der Nocken 23 irgendeinen Bereich der zugeordneten Auflaufausnehmung 24 gegenüberliegt. Eine fluchtende gegenseitige Ausrichtung erhalten die Teile 23,24 dann bei ihrem Ineinandergreifen.

Nach Durchführung eines Wellenwechsels wird durch Beaufschlagung des Zylinderraumes 46 bei Entlüftung des Zylinderraumes 48 der Innenteil 26b des Schutzgehäuses wieder in seine Betriebsstellung axial zurückverschoben, der dabei den Verschlußteil 13 mitnimmt und in seine Schließstellung überführt. Auch hier wird für den Fall eines Antriebs der Trägerwelle(n) 5 vor dem Schließen der Aufnahmevorrichtung dieses Schließen in der ersten Bewegungsphase durch das Zusammenwirken der Teile 23,24 in oben schon beschriebener Weise selbsttätig zwangsweise herbeigeführt.

## Patentansprüche

1. Lagervorrichtung für Wellen, insbesondere für Spannwellen von Wickelmaschinen, bestehend aus einem fest oder axial verschieb- und feststellbar abgestützten Lagergehäuse (4), in dem eine Trägerwelle (5) drehbar gelagert ist, die an ihrem inneren Ende eine freigeb- und verriegelbare Aufnahmevorrichtung (12;13) für ein dieser zugewandtes Ende einer Welle aufweist, wobei die Aufnahmevorrichtung (12;13) einen fest mit der Trägerwelle (5) verbundenen Aufnahmeteil (12) mit einer Profiltasche (15) mit axialer und umfangsseitiger Zugangsöffnung (16;17) für einen Kupplungsteil am Ende einer Welle aufweist und einen relativ zum Aufnahmeteil (12) verlagerbaren, mit diesem mitumlaufenden Verschlußteil (13) umfaßt, der in einer für den Wellenwechsel vorbestimmten Drehstellung des Aufnahmeteils (12) in Offenstellung bewegbar ist und in Offenstellung die umfangsseitige Zugangsöffnung (17) zur Profiltasche (15) freigibt, in seiner Schließstellung diese versperrt und in Zusammenwirken mit einem dem Lagergehäuse (4) zugeordneten ortsfesten Auflaufteil (25) selbsttätig in seine Schließstellung zurückkehrt, sobald der Aufnahmeteil (12) seine für den Wellenwechsel vorbestimmte Drehstellung verläßt, **dadurch gekennzeichnet,** daß
- die Aufnahmevorrichtung (12;13) von einem Schutzgehäuse (26,26b) umgeben ist, das am Lagergehäuse (4) bei umlaufender Trägerwelle (5) in einer Betriebsstellung stillstehend und bei Stillstand der Trägerwelle (5) zumindest mit einem Teil relativ zu diesem begrenzt axial verschiebbar abgestützt ist,
- das Schutzgehäuse (26,26b) und der Verschlußteil (13) in wechselseitigem axialen Mitnahmeeingriff stehen, so daß das Schutzgehäuse (26,26b) bei Bewegung durch einen Antrieb aus seiner Betriebsstellung in eine Wechselstellung den Verschlußteil (13) aus seiner Schließstellung in seine Offenstellung überführt, und
- der Verschlußteil (13) mit einem Nockenteil (23) für ein Zusammenwirken mit dem Auflaufteil (25) versehen ist.

2. Vorrichtung nach Anspruch 1, **dadurch gekennzeichnet,** daß der Verschlußteil (13) als auf dem Aufnahmeteil (12)-verdrehfest abgestützter, jedoch zwischen Offen- und Schließstellung axial verschiebbar geführter Ringschieber ausgebildet ist.

3. Vorrichtung nach Anspruch 1 oder 2, **dadurch gekennzeichnet,** daß der Verschlußteil (13) mit einem einwärts in eine axial ausgerichtete Ausnehmung (18) am Umfang des Aufnahmeteils (12) eingreifenden Ansatz (21) versehen ist, der den Verschlußteil (13) und den Aufnahmeteil (12) in Drehrichtung kuppelt und in Schließstellung des Verschlußteils (13) die umfangsseitige Zugangsöffnung (17) zur Profiltasche (15) verschließt.

4. Vorrichtung nach Anspruch 3, **dadurch gekennzeichnet,** daß der Verschlußteil (13) mit seinem Ansatz (21) über eine Paßfeder (22) und Schrauben (22') auswechselbar verbunden ist.

5. Vorrichtung nach einem der Ansprüche 2 bis 4, **dadurch gekennzeichnet,** daß die den Ansatz (21) des Verschlußteils (13) aufnehmende Umfangsausnehmung (18) des Aufnahmeteils (12) einen Freiraum (41) für die Aufnahme des Ansatzes (21) in der Offenstellung des Verschlußteils (13) umfaßt.

6. Vorrichtung nach einem der Ansprüche 1 bis 5, **dadurch gekennzeichnet,** daß der Verschlußteil (13) an seiner dem Lagergehäuse (4) zugewandten Stirnseite mit einem Nockenteil in Gestalt einer Anzahl von axial vorspringenden, ungleichmäßig über den Umfang verteilt angeordneten, im wesentlichen dreieckförmigen Nocken (23) versehen ist.

7. Vorrichtung nach Anspruch 6, **dadurch gekennzeichnet,** daß die Innen- und die Außenfläche der Nocken (23) jeweils mit einer Zylinderfläche zusammenfallen.

8. Vorrichtung nach Anspruch 6 oder 7, **dadurch gekennzeichnet,** daß den Nocken (23) des Verschlußteils (13)entsprechende dreieckförmige Auflaufausnehmungen (24) zugewandt sind, die in der Stirnseite eines dem Lagergehäuse (4) zugeordneten ringförmigen Auflaufteils (25) ausgespart und den Nocken (23) derart zugeordnet sind, daß nur in der für den Wellenwechsel vorbestimmten Drehstellung des Aufnahmeteils (12) die Nocken (23) in die Auflaufausnehmungen (24) und damit den Verschlußteil (13) in Offenstellung überführbar sind.

9. Vorrichtung nach einem der Ansprüche 1 bis 8, **dadurch gekennzeichnet,** daß der Verschlußteil (13) im Schutzgehäuse (26,26b) über ein Lager (29) abgestützt ist, das zugleich als Mitnehmer den verschlußteil (13) und das Schutzgehäuse (26,26b) für axiale Bewegungen kuppelt.

10. Vorrichtung nach einem der Ansprüche 1 bis 9, **dadurch gekennzeichnet,** daß das Schutzgehäuse (26,26b) im Querschnitt eine etwa L-förmige Grundform aufweist und sich mit einer zylindrischen Innenfläche an seinem Langschenkel auf einer zylindrischen Außenfläche am Lagergehäuse (4) abstützt.

11. Vorrichtung nach Anspruch 9 und 10, **dadurch gekennzeichnet,** daß das Lager (29) zwischen Schutzgehäuse (26,26b) und Verschlußteil (13) vor dem Stirnende des Kurzschenkels des Schutzgehäuses (26,26b) angeordnet ist.

12. Vorrichtung nach Anspruch 10 oder 11, **dadurch gekennzeichnet,** daß zwischen einer radialen Innenfläche des Kurzschenkels des Schutzgehäuses (26,26b) und der ihr gegenüberliegenden Stirnfläche des Lagergehäuses (4) ein Freiraum (40) ausgebildet ist, dessen axiale Breite zumindest der axialen Länge des Hubweges des Verschlußteils (13) zwischen seiner Offen- und seiner Schließstellung entspricht.

13. Vorrichtung nach einem der Ansprüche 1 bis 12, **dadurch gekennzeichnet,** daß in der Außenfläche des vom Schutzgehäuse (26) umgriffenen Teils (27) des Lagergehäuses (4) zumindest eine Nockenbahn (34) vorgesehen ist, die einen etwa schraubenlinienförmigen Verlauf hat und einen am Schutzgehäuse (26) angeordneten Führungsnocken (35) aufnimmt.

14. Vorrichtung nach Anspruch 13**, dadurch gekennzeichnet,** daß das Schutzgehäuse (26) mit einem radialen Handgriff (36) zu seiner Verschwenkung aufweist.

15. Vorrichtung nach Anspruch 13 und 14, **dadurch gekennzeichnet,** daß der Führungsnocken des Schutzgehäuses (26) vom inneren Ende eines Gewindedorns (35) gebildet ist, über den der Handgriff (36) mit dem Schutzgehäuse (26) verbunden ist.

16. Vorrichtung nach einem der Ansprüche 13 bis 15, **dadurch gekennzeichnet,** daß der vom Schutzgehäuse (26) in Schließstellung des Verschlußteils (13) umgriffene Teil des Lagergehäuses (4) von einem stirnseitig an das Lagergehäuse (4) angeschraubten Ringteil (27) gebildet ist.

17. Vorrichtung nach einem der Ansprüche 1 bis 16, **dadurch gekennzeichnet,** daß das Schutzgehäuse (26) mittels einer Federrast (37,38,39) in seiner Betriebsstellung gegenüber dem Lagergehäuse (4) arretiert ist.

18. Vorrichtung nach einem der Ansprüche 1 bis 12, **dadurch gekennzeichnet,** daß zur Betätigung der Aufnahmevorrichtung (12;13) ein Druckmittelantrieb vorgesehen ist.

19. Vorrichtung nach Anspruch 18, **dadurch gekennzeichnet,** daß das Schutzgehäuse (26a,26b) zweiteilig ausgebildet ist und einen mit dem Lagergehäuse (4) fest verbundenen Außenteil (26a) sowie einen in diesem axial verschieblich geführten Innenteil (26b) aufweist, mit dem der Verschlußteil (13) gekuppelt ist.

20. Vorrichtung nach Anspruch 19, **dadurch gekennzeichnet,** daß der Außenteil (26a) des Schutzgehäuses den Zylinderteil und der Innenteil (26b) des Schutzgehäuses den Kolbenteil des Druckmittelantriebs bildet.

21. Vorrichtung nach Anspruch 19 oder 20, **dadurch gekennzeichnet,** daß der Innen- (26b) und der Außenteil (26a) des Schutzgehäuses Zylinder- und Kolbenteil eines doppelwirkenden Druckmittelantriebs bilden.

## Claims

1. A bearing assembly for shafts, particularly for cocking-lever shafts of winding machines, comprising a bearing box (4), which is supported immovably or axially movable and lockable, in which bearing box (4) a supporting shaft (5) is rotatably mounted, which has, at its inner end, a receiving apparatus (12; 13), which can be released or locked, for an end of a shaft, which faces this receiving apparatus (12,; 13), the receiving apparatus (12; 13) having a receiving part (12) which is firmly connected with the support shaft (5) and has a profile pocket (15), with axial and peripheral access openings (16; 17) for a coupling part at the end of a shaft and comprising a locking part (13), which can be shifted relative to the receiving part (12) and revolves with it and which can be moved into an open position in a position of rotation of the receiving part (12) that is intended for the exchange of shafts and which releases the peripheral access opening (17) to the profile pocket (15) in the open position and blocks this in the closed position and which, in cooperation with a stationary leading part (25) assigned to the bearing box (4), automatically returns to its closed position, as soon as the receiving part (12) leaves its position of rotation intended for the exchange of shafts, characterized in that
- the receiving part (12; 13) is surrounded by a protective housing (26, 26b), which is supported at the bearing box (4) in a stationary state in an operating position when the supporting shaft (5) is revolving and at least with one part that can be shifted to a limited extent axially relative to the bearing box (4) when the supporting shaft (5) is in a stationary state
- the protective housing (26, 26b) and the locking part (13) mutually engage one another axially, so that the protective housing (26, 26b), when moved by a driving mechanism from its operating position into an exchange position, transfers the locking part (13) out of its closed position into its open position (13) and
- the locking part (13) is provided with a cam part (23) for interacting with the leading part (25).

2. The apparatus of c!aim 1, characterized in that the locking part (13) is constructed as a sleeve, which is supported so that it cannot rotate on the receiving part (12), yet can be shifted axially between the open position and the closed position.

3. The apparatus of claims 1 or 2, characterized in that the locking part (13) is provided with an extension (21), which engages inwards an axially aligned recess (18) at the periphery of the receiving part (12), couples the locking part (13) and the receiving part (12) in the direction of rotation and, in the closed position of the locking part (13), closes the peripheral access opening (17) to the profile pocket (15).

4. The apparatus of claim 3, characterized in that the locking part (13) is connected exchangeably with its extension (21) by an adjusting spring (22) and screws (22').

5. The apparatus of claims 2 to 4, characterized in that the peripheral recess (18) of the receiving part (12) accommodating the extension (21) of the locking part (13) comprises a free space (41) for accommodating the extension (21) in the open position of the locking part (13).

6. The apparatus of one of the claims 1 to 5, characterized in that the locking part (13), at its end face facing the bearing box (4), is provided with a cam part in the form of a number of axially projecting, essentially triangular cams (23), which are disposed nonuniformly over the periphery.

7. The apparatus of claim 6, characterized in that the inner and outer surfaces of the cam (23) in each case coincide with a cylinder surface.

8. The apparatus of claims 6 or 7, characterized in that the cams (23) of the locking part (13) are faced by corresponding triangular leading recesses (24), which are hollowed out in the end side of an annular leading part (25), which is disposed on the bearing box (4), and are assigned to the cam (23) in such a manner, that the cams (23) can be transferred into the receiving recesses (24) and, with that, the locking part can be transferred into the open position only in the position of rotation of the receiving part (12) that is intended for the exchange of shafts.

9. The apparatus of one of the claims 1 to 8, characterized in that the locking part (13) is supported in the protective housing (26, 26b) by means of a bearing (29), which, at the same time, as cam, couples the locking part (13) and the protective housing (26, 26b) for axial motions.

10. The apparatus of one of the claims 1 to 9, characterized in that, in cross section, the protective housing (26, 26b) has an approximately L-shaped basic shape and, with a cylindrical inner surface at its long leg, supports itself on a cylindrical outer surface of the bearing box (4).

11. The apparatus of claims 9 and 10, characterized in that the bearing (29) between the protective housing (26, 26b) and the locking part (13) is disposed before the end face of the short leg of the protective housing (26, 26b).

12. The apparatus of claims 10 or 11, characterized in that, between the radial inner surface of the short leg of the protective housing (26, 26b) and the opposite end face of the bearing box (4), a free space (40) is formed, the axial width of which corresponds at least to the axial length of the height of lift of the locking part (13) between its open and its closed positions.

13. A locking apparatus of one of the claims 1 to 12, characterized in that, in the outer surface of the part (27) of the bearing box (4) embraced by the protective housing (26), at least one cam track (34) is provided, which has an approximately helical course and accommodates a cam follower disposed on the protective housing (26).

14. The apparatus of claim 13, characterized in that the protective housing (26) has a radial handle (36), with which it can be tilted.

15. The apparatus of claims 13 and 14, characterized in that the cam follower of the protective housing (26) is formed by the inner end of the threaded mandrel (35), by means of which the handle (36) is connected with the protective housing (26).

16. The apparatus of one of the claims 13 to 15, characterized in that the part of the bearing box (4), which is embraced by the protective housing (26) in the closed position of the locking part (13), is formed by a ring part, which is screwed to the end face of the bearing box (4).

17. The apparatus of one of the claims 1 to 16, characterized in that the protective housing (26) is locked in its operating position with respect to the bearing box (4) by means of a spring catch (37, 38, 39).

18. The apparatus of one of the claims 1 to 12, characterized in that a pressure medium driving mechanism is provided for manipulating the receiving apparatus (12; 13).

19. The apparatus of claim 18, characterized in that the protective housing (26a, 26b) is constructed in two parts and has an outer part (26a), which is firmly connected with the bearing box (4), as well as an inner part (26b), which is guided in the outer part (26a) so that it can be shifted axially and is coupled with the locking part (13).

20. The apparatus of claim 19, characterized in that the outer part (26a) of the protective housing forms the cylinder part of the pressure medium driving mechanism and the inner part (26b) of the protective housing from the piston part of the pressure medium driving mechanism.

21. The apparatus of claims 19 or 20, characterized in that the inner (26b) and outer (26a) parts of the protective housing form the cylinder and piston parts of a double-acting pressure medium driving mechanism.

## Revendications

1. Dispositif de palier pour arbres, en particulier pour arbres de serrage de machines à enrouler, constitué d'un corps de palier (4) monté fixe ou monté de manière à pouvoir coulisser axialement et être bloqué, dans lequel est monté à rotation un arbre de support (5) qui présente, à son extrémité interne, un dispositif de réception (12; 13) libérable et verrouillable pour une extrémité d'un arbre tournée vers ce dispositif, étant entendu que le dispositif de réception (12; 13) comporte un élément de réception (12) relié rigidement à l'arbre de support (5) et présentant un logement profilé (15) avec une ouverture d'accès axiale et périphérique (16; 17) pour un organe d'accouplement prévu à l'extrémité d'un arbre et un élément de fermeture (13) déplaçable par rapport à l'élément de réception (12) et tournant avec celui-ci, qui peut être amené en position d'ouverture, dans une position de rotation de l'élément de réception prédéterminée pour le changement d'arbre, et qui, en position d'ouverture, libère l'ouverture d'accès périphérique (17) au logement profilé (15), en position de fermeture, masque cette ouverture, et, par coopération avec une pièce de butée fixe (25) associée au corps de palier (4), revient automatiquement dans sa position de fermeture dès que l'élément de réception (12) quitte sa position de rotation prédéterminée pour le changement d'arbre, caractérisé en ce que :
- le dispositif de réception (12; 13) est entouré par une virole de protection (26, 26b) qui est montée fixe sur le corps de palier (4) dans une position de fonctionnement, lorsque l'arbre de support (5) tourne, et qui peut coulisser axialement sur une distance limitée, avec au moins un élément, par rapport au corps de palier, lorsque l'arbre de support (5) est immobile,
- la virole de protection (26, 26b) et l'élément de fermeture (13) sont réciproquement en prise d'entraînement dans le sens axial, de sorte que la virole de protection (26, 26b), lorsqu'elle est déplacée par un moyen d'entraînement, depuis sa position de fonctionnement vers une position de changement d'arbre, transfère l'élément de fermeture de sa position de fermeture vers sa position d'ouverture, et
- l'élément de fermeture (13) est pourvu d'une partie à cames (23) destinée à coopérer avec la partie de butée (25).

2. Dispositif suivant la revendication 1, caractérisé en ce que l'élément de fermeture (13) a la forme d'un coulisseau annulaire monté sur l'élément de réception (12) de manière à ne pas tourner par rapport à celui-ci, tout en étant guidé à coulissement dans le sens axial entre une position d'ouverture et une position de fermeture.

3. Dispositif suivant la revendication 1 ou 2, caractérisé en ce que l'élément de fermeture (13) est pourvu d'une saillie (21) qui s'étend vers l'intérieur et s'engage dans un évidement (18) orienté axialement et ménagé dans la périphérie de l'élément de réception (12), cette saillie accouplant l'élément de fermeture (13) et l'élément de réception (12) dans le sens de rotation et fermant, dans la position de fermeture de l'élément de fermeture (13), l'ouverture d'accès périphérique (17) au logement profilé (15).

4. Dispositif suivant la revendication 3, caractérisé en ce que l'élément de fermeture (13) est relié de manière amovible à sa saillie (21) par l'intermédiaire d'une clavette d'ajustement (22) et de vis (22').

5. Dispositif suivant l'une quelconque des revendications 2 à 4, caractérisé en ce que l'évidement périphérique (18) de l'élément de réception (12) recevant la saillie (21) de l'élément de fermeture (13) présente un dégagement (41) destiné à recevoir la saillie (21) dans la position d'ouverture de l'élément de fermeture (13).

6. Dispositif suivant l'une quelconque des revendications 1 à 5, caractérisé en ce que l'élément de fermeture (13) est pourvu, à sa face d'about tournée vers le corps de palier (4), d'une partie à cames ayant la forme d'une pluralité de cames sensiblement triangulaires (23) qui font saillie dans le sens axial et qui sont inégalement réparties sur la périphérie.

7. Dispositif suivant la revendication 6, caractérisé en ce que la surface interne et la surface externe des cames (23) coïncident chacune avec une surface de cylindre.

8. Dispositif suivant la revendication 6 ou 7, caractérisé en ce que des évidements de butée triangulaires correspondants (24) font face aux cames (23) de l'élément de fermeture (13), les évidements étant ménagés dans la face d'about d'une pièce de butée annulaire (25) associée au corps de palier (4) et étant affectés aux cames (23) d'une manière telle que les cames (23) ne puissent être amenées dans les évidements de butée (24) et, de la sorte, l'élément de fermeture (13) dans la position d'ouverture que lorsque l'élément de réception (12) se trouve dans sa position de rotation prédéterminée pour le changement d'arbre.

9. Dispositif suivant l'une quelconque des revendications 1 à 8, caractérisé en ce que l'élément de fermeture (13) est monté dans la virole de protection (26, 26b) par l'intermédiaire d'un palier (29) qui sert en même temps d'élément entraîneur pour accoupler l'élément de fermeture (13) et la virole de protection (26, 26b) en vue de déplacements axiaux.

10. Dispositif suivant l'une quelconque des revendications 1 à 9, caractérisé en ce que la virole de protection (26, 26b) a en coupe transversale une forme de base sensiblement en L et prend appui par une surface interne cylindrique de sa longue branche sur une surface extérieure cylindrique du corps de palier (4).

11. Dispositif suivant les revendications 9 et 10, caractérisé en ce que le palier (29) entre la virole de protection (26, 26b) et l'élément de fermeture (13) est disposé devant l'extrémité d'about de la petite branche de la virole de protection (26, 26b).

12. Dispositif suivant la revendication 10 ou 11, caractérisé en ce qu'entre une surface interne radiale de la branche courte de la virole de protection (26, 26b) et la surface d'about qui lui est opposée du corps de palier (4) est ménagé un dégagement (40) dont la largeur axiale correspond au moins à la longueur axiale de la course de l'élément de fermeture (13) entre sa position d'ouverture et sa position de fermeture.

13. Dispositif suivant l'une quelconque des revendications 1 à 12, caractérisé en ce que, dans la surface extérieure de la partie (27) du corps de palier (4) entourée par la virole de protection (26) est ménagé au moins un chemin de came (34) qui présente une allure sensiblement hélicoïdale et reçoit une came de guidage (35) montée sur la virole de protection (26).

14. Dispositif suivant la revendication 13, caractérisé en ce que la virole de protection (26) présente une poignée radiale (36) servant à la faire pivoter.

15. Dispositif suivant les revendications 13 et 14, caractérisé en ce que la came de guidage de la virole de protection (26) est formée par l'extrémité intérieure d'un doigt à extrémité filetée (35) par l'intermédiaire duquel la poignée (36) est reliée à la virole de protection (26).

16. Dispositif suivant l'une quelconque des revendications 13 à 15, caractérisé en ce que la partie du corps de palier (4) entourée par la virole de protection (26), dans la position de fermeture de l'élément de fermeture (13), est formée par une partie annulaire (27) vissée sur la face d'about du corps de palier (4).

17. Dispositif suivant l'une quelconque des revendications 1 à 16, caractérisé en ce que la virole de protection (26) est arrêtée dans sa position de fonctionnement par rapport au corps de palier (4) au moyen d'un déclic à ressort (37, 38, 39).

18. Dispositif suivant l'une quelconque des revendications 1 à 12, caractérisé en ce qu'un moyen d'entraînement à fluide sous pression est prévu pour l'actionnement du dispositif de réception (12; 13).

19. Dispositif suivant la revendication 18, caractérisé en ce que la virole de protection (26a, 26b) est en deux parties et comporte une partie extérieure (26a) reliée rigidement au corps de palier (4) et une partie intérieure (26b) guidée à coulissement axial dans la première et à laquelle l'élément de fermeture (13) est accouplé.

20. Dispositif suivant la revendication 19, caractérisé en ce que la partie extérieure (26a) de la virole de protection forme le cylindre et la partie intérieure (26b) de la virole de protection forme le piston du moyen d'entraînement à fluide sous pression.

21. Dispositif suivant la revendication 19 ou 20, caractérisé en ce que la partie intérieure (26b) et la partie extérieure (26a) de la virole de protection forment le cylindre et le piston d'un moyen d'entraînement à fluide sous pression à double effet.
